Europäisches Patentamt

European Patent Office

Office européen des brevets

(11) Publication number: **0 105 372**
**B1**

# EUROPEAN PATENT SPECIFICATION

(45) Date of publication of patent specification: **03.02.88**

(21) Application number: **82901014.9**

(22) Date of filing: **08.04.82**

(86) International application number:
**PCT/JP82/00112**

(87) International publication number:
**WO 83/03668 27.10.83 Gazette 83/25**

(51) Int. Cl.⁴: **G 01 F 1/64, G 01 F 1/78**

(54) **FLOW RATE SENSOR.**

(43) Date of publication of application:
**18.04.84 Bulletin 84/16**

(45) Publication of the grant of the patent:
**03.02.88 Bulletin 88/05**

(84) Designated Contracting States:
**DE FR GB**

(56) References cited:
**CH-A- 465 252**
**DE-A-1 623 997**
**DE-B-1 121 822**
**JP-U-54 125 663**
**US-A-3 201 986**
**US-A-3 528 287**
**US-A-4 255 976**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **UEYAMA, Yoshiji Mitsubishi Denki K.K.**
**Himeji Seisakusho 840, Chiyodacho Himeji-shi Hyogo 670 (JP)**

(74) Representative: **Lawson, David Glynne et al**
**MARKS & CLERK 57-60 Lincoln's Inn Fields London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

Technical field

This invention relates to a flow rate detection device for measuring a flow rate of a dielectric fluid.

Background art

As a flow meter for detecting a flow rate of a dielectric fluid such as a fuel or the like, there is used a vane flow meter in which, fluid flowing through a flow path strikes against a vane wheel. This causes the vane wheel to rotate at a speed identical to a flow speed of the fluid. Therefore, if the rotational speed N of the vane wheel in r/sec is measured (this being proportional to the flow rate $Q_v$), the flow rate of the fluid flowing through the flow path can be derived from the following expression:

$$N = Kn\frac{Q_v}{S} \qquad (1)$$

Where:

S=Sectional area of the flow path; and

Kn=a constant given by the ratio between flow speed of the fluid and rotation speed N of the vane wheel.

Since conventional vane flow meters measure the rotational speed N in r/sec of the vane wheel as described above, the flow rate of fluid is accurately measured provided that the stream of the fluid flowing through the flow path is in the steady state. However, where the flow rate of the fluid suddenly changes (suddenly increased or suddenly decreased), there is a time delay while the vane wheel adjusts to a speed identical to the flow speed of the fluid. This is because of inertia of the vane wheel. The extent to which this problem can be alleviated, by reducing the inertia, is limited. Hence, it is impossible to accurately measure an instantaneous flow rate.

An alternative type of flowmeter is described in Swiss patent CH—A—465 252. In this flowmeter, a pair of electrodes are on opposite sides of a flow path. The electrodes can establish an electric field across the flow path, which polarises the molecules of fluid flowing along the flow path. A magnetic field is created by polarisation of the molecules of the fluid. This magnetic field is measured to provide an indication of the volume of fluid passing along the flow path.

A further type of flow meter is described in German patent DE—A—1 623 997. In the flow meter of DE—A—1 623 997, a polarisable fluid passes through an electric field existing between plates of a divided measuring capacitor. Polarisation of the fluid takes place between one capacitor, and depolarisation takes place between the other. When a constant voltage is applied to the measuring capacitor, the current intensity is proportional to the number of molecules flowing through per unit of time and is proportional to the fluid flow.

Disclosure of the invention

According to the present invention, there is provided a flowmeter comprising electric field forming means disposed in the flow path of a dielectric fluid and having opposed electrodes arranged to form an electric field extending across the flow path of the fluid on application of a voltage between the electrodes, and current-detecting means for detecting a dielectric polarisation current flowing when the dielectric fluid flows through the electric field, characterised in that the electrodes are a central electrode positioned substantially coaxially with respect to a circumferential electrode which encircles and is radially spaced from the central electrode, the electrodes being arranged to form an electric field of which the intensity changes spatially along the path of the fluid.

Brief description of the drawings

Figure 1 is a side elevational sectional view illustrating one embodiment of the present invention;

Figures 2, 3 and 4 are views explaining the operation of the present invention; and Figure 5 is a side elevational sectional view illustrating another embodiment of the present invention.

Best mode for carrying out the invention

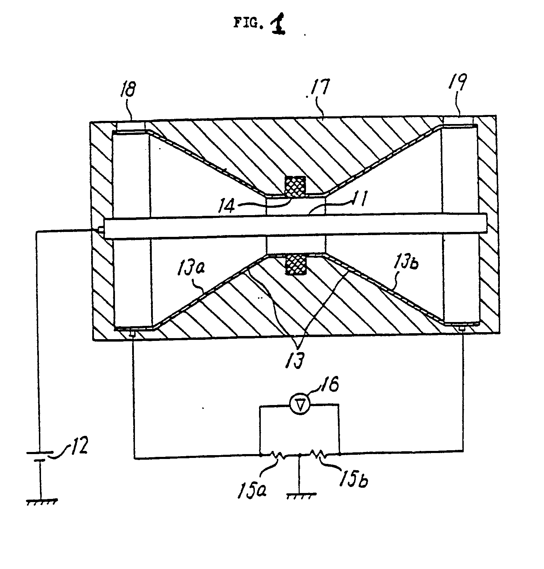

Figure 1 shows one embodiment of the present invention wherein (11) is a central electrode disposed in a path of a dielectric fluid and connected to a positive pole of a high voltage DC electric source (12). (13) is a cylindrical circumferential electrode disposed around the outer periphery of the central electrode (11) to oppose to each other through a fluid flowing space, and consisting of two circumferential electrodes (13a) and (13b) divided in a direction of flow of the fluid. (14) is an insulating member for insulating those circumferential electrodes (13a) and (13b) from each other, (15a) and (15b) are current detecting resistances serially connected between said circumferential electrodes (13a) and (13b), (16) a voltmeter, and (17) is a housing supporting each of said electrodes (11) and (13) and comprised of an insulating member, (18) and (19) are an inflow port and an outflow port for the dielectric fluid connected to a flow path of the fluid not shown. Still more the middle point of said resistances (15a) and (15b) is connected to ground and a voltage across said electric source (2) is applied between said electrodes (11) and (13). Also said electrodes (11) and (13a) and (13b) are constructed so that sections perpendicular to the stream of the fluid are circular-shaped.

Then the description will be made in conjunction with the operation of Figure 1 constructed in this way. Applied between the central electrode (11) and the circumferential electrodes (13a) and (13b) connected to ground through the detecting resistances (15a) and (15b) respectively is a voltage by means of the electric source (12) and an electric field is formed in the path of the fluid surrounded by the central electrode (11) and the circumferential electrodes (13a) and (13b). The shapes of those central electrode (11) and circumferential electrodes (13a) and (13b) are formed so that by considering that a distribution of electric fields on the side of the inflow port (18) for the fluid is rendered symmetric with respect to that on the side of the outflow port (19) therefor about the insulating member (14), the electric field intensity is strongest adjacent to the insulating member (14) and weakest adjacent to the inflow port (18) and outflow port (19) for the fluid with the electric field intensity therebetween spatially slowly changed. Assuming that E(z) designates an electric field intensity formed at each part in the path of the fluid, $K_e$ a specific dielectric constant and $\varepsilon_0$ designates a dielectric constant of a vacuum, a dielectric polarization intensity P at each part in the path of the fluid is given by the following expression:

$$P = \varepsilon_0(K_e - 1)E(z) \qquad (2)$$

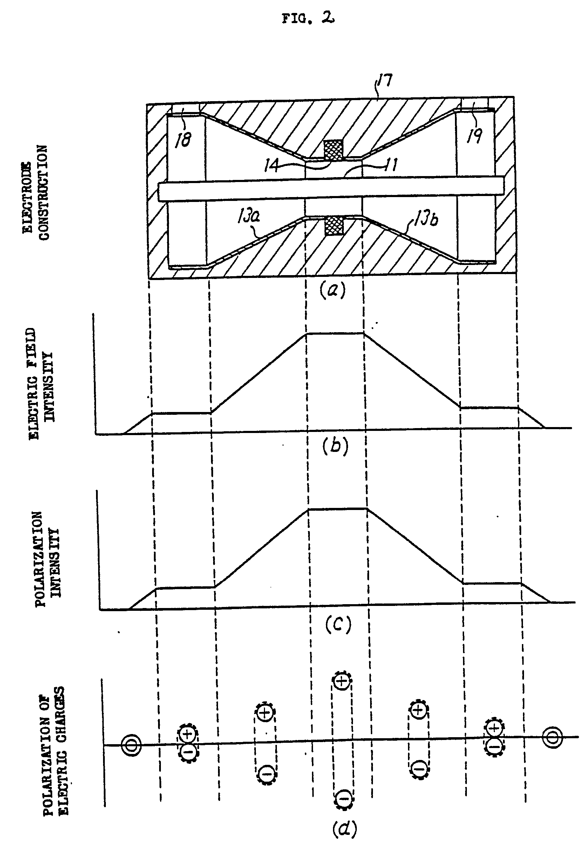

In Figure 2 there are illustrated the shapes and dispositions of the central electrode (11) and the circumferential electrodes (13a) and (13b), the electric field intensity E at each part in the path of the fluid and the dielectric polarization intensity P of the dielectric to locally correspond to one another. That is, Figure 2(a) shows the shapes and disposition of the central electrode (11) and the circumferential electrodes (13a) and (13b). Interelectrode distances between the central electrode (11) and the circumferential electrodes (13a) and (13b) are rendered largest adjacent to the inflow port (18) and the outflow port (19) for the fluid and smallest adjacent to the insulating member (14) on the central part while the interelectrode distances therebetween are rendered linearly changed. Figure 2(b) corresponds to the shapes and disposition of the electrodes shown in Figure 2(a) and qualitatively illustrates a distribution of the electric field intensities at each part. The electric field intensity within the path of the fluid is weakest adjacent to the inflow port (18) and the outflow port (19) for the fluid and strongest adjacent to the insulating member (14) on the central part with the electric field intensity therebetween slowly changed. Figure 2(c) corresponds to the distribution of the electric field intensities shown in Figure 2(b) and illustrates a distribution of dielectric polarization intensities at each part. Since the specific dielectric constant of the dielectric is a constant, the dielectric polarization intensity is proportional to the electric field intensity as shown by the expression (2). Accordingly the distribution of the dielectric polarization intensities becomes identical to that of the electric field intensities. Figure 2(d) illustrates the distribution of the dielectric polarization intensities shown in Figure 2(c) by modelling that distribution with the polarization of positive and negative charges composing dielectric molecules. Before the dielectric fluid enters the region of the electric field, the dielectric molecules are neutral but when the dielectric fluid enters the region of the electric field, the polarization of the positive and negative charges becomes strong in proportion to the electric field intensity and the polarization becomes strongest adjacent to the insulating member (14) on the central part. When the central part is passed by and the electric field intensity becomes weak, the polarization of the positive and negative charges becomes weak. When leaving the region of the electric field, the dielectric becomes again neutral.

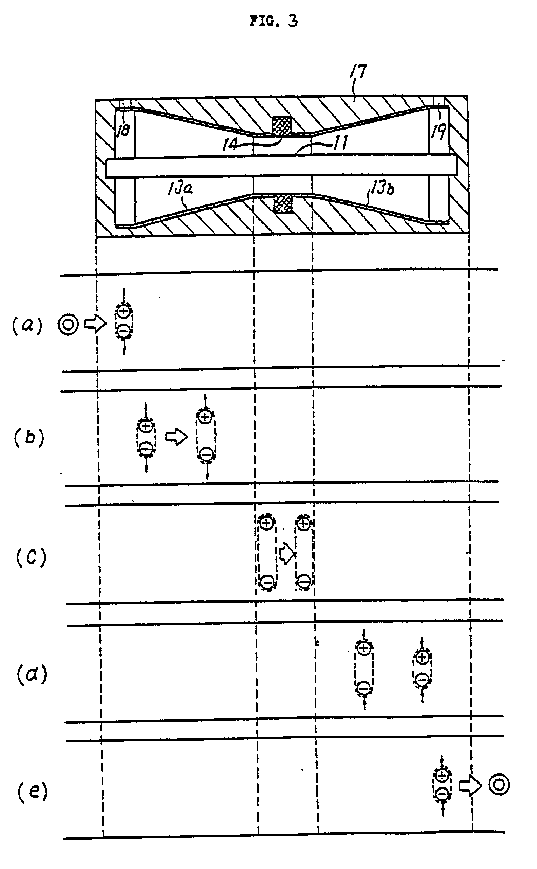

Figure 2 shows the distribution of the polarization intensities of the dielectric fluid which is the same in spite of whether the dielectric fluid is moving or stationary. However, perceiving the individual molecules, the polarization intensities of the individual molecules are constant with the dielectric fluid put in the stationary state whereas the polarization intensities of the individual molecules change upon the flowing of the dielectric fluid because of changes in polarization intensities acting upon the individual molecules. In Figure 3 there is illustrated a situation in which the polarization intensity changes with the flowing dielectric fluid by a model for the polarization of positive and negative charges of the molecule with the individual molecules perceived.

Figure 3(a) illustrates a situation of the molecule of the dielectric fluid before it enters the region of the electric field. In this region no electric field exists in the path so that the positive and negative charges of the molecule are not polarized and the molecule is neutral. Figure 3(b) illustrates a situation of the molecule of the dielectric fluid in which it has entered the region of the electric field through the inflow port (18). In this region the electric field acting on the molecule becomes strong upon the molecule flowing to the side of the outflow port (19). Thus the positive and negative charges of the molecule are moved in the direction of the arrow ($\rightarrow$) in the Figure to advance the polarization. In other words, when the dielectric fluid flows to the side of the outflow port (19), a dielectric polarization current flows through between the central electrode (11) and the circumferential electrode (13a). Figure 3(c) illustrates a situation of the molecule of the dielectric fluid in which it has come adjacent to the insulating member (14) on the central part. In this region the electric field intensity is strongest so that the polarization intensity of the molecule is strongest but the electric field intensity acting on the molecule of the dielectric fluid does not change even when the molecule flows to the side of the outflow port (19). Thus the polarization intensity of the molecule does not change and the dielectric polarization current does not flow. Figure 3(d) illustrates a situation of the molecule of the dielectric fluid in which it has further flowed to the side of the outflow port (19). On the contrary of the region shown in Figure 3(b) when the molecule of the dielectric fluid flows to the side of the outflow port (19) in this region, the electric field intensity acting on the molecule becomes weak so that the positive and negative changes of the molecule are moved in the direction of the arrow (→) in the Figure to return the polarization. In other words, when the dielectric fluid flows to the side of the outflow port (19), a dielectric polarization current in the sense reversed from that illustrated in the region shown in Figure 3(b), that is to say, a negative one flows through between the central electrode (11) and the circumferential electrode (13b). Figure 3(e) shows a situation of the dielectric fluid in which it has come outside of the region of the electric field through the outflow port (19). In this region no electric field exists so that the polarization of the positive and negative changes of the dielectric disappears and the dielectric fluid becomes neutral.

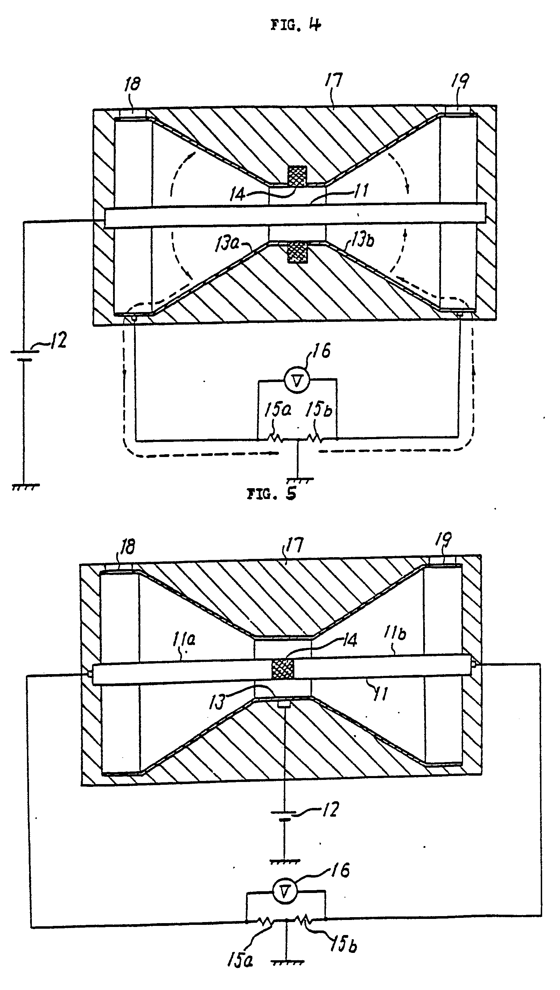

Figure 4 shows a course on which the dielectric polarization current flows through between the central electrode (11) and the circumferential electrodes (13a) and (13b) in the process in which the dielectric fluid enters the region of the electric field through the inflow port (18) for the fluid and flows through the region of the electric field until it flows out from the outflow port (19). In a region in which the polarization intensity is increased the dielectric polarization current from the central electrode (11) flowing into the circumferential electrode (13a) passes through the current detecting resistances (15a) and (15b) and enters the circumferential electrode (13b) while in a region in which the polarization intensity is decreased, it enters the central electrode (11) through the circumferential electrode (13b) as a negative dielectric polarization current. At that time, if the voltmeter (16) measures a voltage developed across the current detecting resistances (15a) and (15b) then this permits the measurement of a dielectric polarization current flowing when the dielectric fluid flows through the electric field whose intensity spatially varies along the stream of the dielectric fluid.

Still more when the dielectric fluid changes in sense of the stream, the dielectric polarization current also varies in sense. Thus the sense of the stream can be decided.

This dielectric polarization current $I_p$ is determined by the voltage V applied between the central electrode (11) and the circumferential electrodes (13a) and (13b), a radius $r_i$ of an internal electrode [the voltage applied circumferential electrode (11)] a radius $r_0$ of an outer electrode [the circumferential electrode (13)] and a volume flow rate $G_v$ of the dielectric fluid and it is given by the following expression:

$$I_p = \frac{2\varepsilon_0(K_e-1)V}{(r_0^2-r_i^2)\, 1n\dfrac{r_0}{r_i}} G_v \qquad (3)$$

In the expression (3) a specific polarizability $(K_e-1)$ of the dielectric is proportional to a density $\rho$ of the dielectric and given by the following expression:

$$[K_e-1]=K_p\rho \qquad (4)$$

Accordingly assuming that $G_m$ designates a mass flow rate of the dielectric fluid, the dielectric polarization current $I_p$ is given by the following expression:

$$I_p = \frac{2\varepsilon_0 K_p V}{(r_0^2-r_i^2)\, 1n\dfrac{r_0}{r_i}} G_m \qquad (5)$$

In the expressions (4) and (5) $K_p$ is a constant inherent to the dielectric, and $r_i$ and $r_0$ are constants as determinated by the size and shape of the voltage V applied electrode (11) and the current detecting electrode (13). Thus assuming that the voltage V applied between the voltage applied electrode (11) and the current detecting electrode (13) is constant, the dielectric polarization current $I_p$ becomes proportional to the mass flow rate $G_m$ of the dielectric fluid. That is, the flow meter according to the present invention is a mass flow meter for a dielectric fluid.

Figure 5 shows another embodiment of the present invention. In the embodiment shown in Figure 1 through 4 the electrodes are arranged coaxially and the circumferential electrode (13) is divided with the current detecting resistances (15a) and (15b) connected therebetween in order to form the electric field having an intensity spatially changed along the stream of the dielectric fluid but the effect of the present invention is not damaged even by dividing the central electrode (11), coupling two electrodes (11a) and (11b) to each other through the insulating member (14) and connecting the current detecting resistances (15a) and (15b) between those electrodes (11a) and (11b) as in another embodiment shown in Figure 5.

Furthermore the generation and neutralization of the polarization can be caused on the dielectric fluid through the utilization of a change in electric field intensity developed in the vicinity of either end of a direction of a stream of the fluid flowing through between a pair of equidistant coaxial electrodes without obtaining a change in electric field due to a variation in distance between the respective electrodes (11) and (13).

As described above, and according to the present invention, the electrodes for forming the electric field having an intensity changed spatially along the stream of the dielectric fluid are arranged coaxially and the dielectric polarization current flowing when the dielectric fluid flows through this electric field is measured thereby to measure the mass flow rate of the dielectric fluid resulting in the following effects:

(i) Since movable mechanical portions are not included structurally and temporally delaying elements due to inertias and others do not exist, the response is fast and not only the mean flow rate of the dielectric fluid but also an instantaneous flow rate of an intermittent stream can be faithfully measured with a good accuracy.

(ii) Since the dielectric polarization current is inverted in sense in accordance with a direction of flow of the dielectric fluid, the sense of flow of the dielectric fluid can be decided in accordance with the polarity of the dielectric polarization current.

(iii) Since the electric field formed in the path of the dielectric fluid is formed of a pair of electrodes put in coaxial arrangement, the axis symmetry can be made about the axis of the central electrode and a disturbance of the electric field attributing to the shape and disposition of the electrodes does not exist adjacent to a maximum of the electric field intensity. Thus it becomes possible to effect the stable measurement with a high accuracy.

(iv) The path of the dielectric fluid is surrounded by the circumferential electrode and no disturbance of the electric field due to the intrusion of an external electric field exists adjacent to a maximum of the electric field intensity. Thus it becomes possible to effect the stable measurement with a high accuracy.

(v) Since the path of the dielectric fluid can be rendered circular, there is provided a flow meter for dielectric fluids small-sized and small in pressure loss.

(vi) Since the structure is simple and includes no movable portion, there is provided a flow rate detection device inexpensive and high in reliability.

Industrial applicability

The present invention is not restricted to a flow meter for detecting a flow rate of a fuel and so far as the flow rate of dielectric fluids is concerned, it is similarly applicable to devices for measuring it.

Claim

A flowmeter comprising electric field forming means disposed in the flow path of a dielectric fluid and having opposed electrodes (11, 13) arranged to form an electric field extending across the flow path of the fluid on application of a voltage between the electrodes, and current-detecting means (15, 16) for detecting a dielectric polarisation current flowing when the dielectric fluid flows through the electric field, characterised in that the electrodes are a central electrode (11) positioned substantially coaxially with respect to a circumferential electrode (13) which encircles and is radially spaced from the central electrode, the electrodes being arranged to form an electric field of which the intensity changes spatially along the path of the fluid.

Patentanspruch

Durchflußmengenmesser mit im Strömungsweg eines dielektrischen Fluids angeordneten Mitteln zur Bildung eines elektrischen Feldes und mit einander gegenüberstehenden Elektroden (11, 13), die so angeordnet sind, daß beim Anlegen einer Spannung zwischen die Elektroden ein über den Fluidströmungsweg verlaufendes elektrisches Feld gebildet wird, und mit einem Stromfühler (15, 16), der einen dielektrischen Polarisationsstrom erfaßt, wenn das dielektrische Fluid das elektrische Feld durchströmt, dadurch gekennzeichnet, daß die Elektroden sind: eine zentrale Elektrode (11), die im wesentlichen koaxial relativ zu einer Umfangselektrode (13) angeordnet ist, die die zentrale Elektrode umschließt und in Radialrichtung von ihr beabstandet ist, wobei die Elektroden so angeordnet sind, daß sie ein elektrisches Feld erzeugen, dessen Stärke sich räumlich entlang der Fluidströmungsbahn ändert.

Revendication

Débitmètre comprenant un moyen formant un champ électrique disposé dans le trajet d'écoulement d'un fluide diélectrique et ayant des électrodes opposées (11, 13) agencées pour former un champ électrique s'étendant à travers le trajet d'écoulement du fluide lors de l'application d'une tension entre les électrodes, et un moyen de détection de courant (15, 16) pour détecter un courant de polarisation diélectrique s'écoulant lorsque le fluide diélectrique traverse le champ électrique, caractérisé en ce que les électrodes sont une électrode centrale (11) placée sensiblement coaxialement par rapport à une électrode circonférentielle (13) qui entoure et est radialement espacée de l'électrode centrale, les électrodes étant agencées pour former un champ électrique dont l'intensité change dans l'espace le long du trajet du fluide.

FIG. 1

# 0 105 372

FIG. 2

ELECTRODE CONSTRUCTION

(a)

ELECTRIC FIELD INTENSITY

(b)

POLARIZATION INTENSITY

(c)

POLARIZATION OF ELECTRIC CHARGES

(d)

2

FIG. 3

FIG. 4

FIG. 5